# EUROPEAN PATENT APPLICATION

(11) **EP 1 649 907 A1**
(43) Date of publication of application: **26.04.2006**
(21) Application number: 05256479.6
(22) Date of filing: 19.10.2005
(51) Int. Cl.: A63B 55/08, B60R 9/06, B62B 1/06

(54) **Method and apparatus for attaching a golf bag to a golf car**

(30) Priority: 19.10.2004 US 968841
(71) Applicant: TEXTRON, INC., Providence, Rhode Islands 02903 (US)
(72) Inventor: Haines, Derek W., Evans, 30809 Georgia (US); Hanson, Donald, Augusta, 30809 Georgia (US)
(74) Representative: Moir, Michael Christopher

(57) **Abstract**

A system and method for mounting a golf bag onto a golf car in a secure position includes a first attachment member arranged on the golf bag. A second attachment member is arranged on the golf car. The first attachment member presents an engagement surface operable to matingly engage a complementary engagement surface on the second attachment member. One of the first and second attachment members defines a male insertion portion and the other attachment member defines a female receiving portion. The first and second attachment members cooperatively mate upon movement of the golf bag in a linear direction relative to the golf car.

## Description

### FIELD OF THE INVENTION

The present invention relates to golf cars and more specifically to a method and apparatus for securing a golf bag to a golf car.

### BACKGROUND OF THE INVENTION

Golf cars provide transportation for golfers around a golf course. A golf car must also securely carry a golf bag in a location for convenient access throughout a round of golf. Typically, the rearward portion of the golf car defines a golf bag carrier area that supports the golf bag or bags in a centrally upright orientation. In one application, a support brace is provided for aligning with an upper portion of the golf bag and providing lateral support. Generally, a strap is affixed to the support brace for securing the golf bag to the golf car. A free end of the strap may be looped around the upper portion of the golf bag and pinched into a retained position with a swing arm pivotally mounted to the support brace. Often, two strap arrangements are available at the golf bag carrier area for accommodating two golf bags.

Existing arrangements allow the golf bag to rotate and slide down low, especially when only a single bag is positioned in the golf bag carrier area. In addition, golf course terrain may present hilly conditions, making it difficult to maintain the golf bag in a secure position.

While such arrangements have proven to be satisfactory for their purpose, a need exists in the art to provide a simpler, more cost effective system for securing a golf bag to a golf car in a simple, convenient, and robust manner.

### SUMMARY OF THE INVENTION

A system and method for mounting a golf bag onto a golf car in a secure position includes a first attachment member arranged on the golf bag. A second attachment member is arranged on the golf car. The first attachment member presents an engagement surface operable to matingly engage a complementary engagement surface on the second attachment member.

According to other features one of the first and second attachment members defines a male insertion portion and the other attachment member defines a female receiving portion. The first and second attachment members cooperatively mate upon movement of the golf bag in a linear direction relative to the golf car. The male insertion portion defines a body portion having outwardly tapered sidewalls extending away from the golf bag. The female receiving portion defines a receiving structure having inwardly tapered sidewalls extending away from the golf car.

According to yet other features, the male insertion portion defines a body portion and at least one arm extending outwardly from the body portion. The at least one arm operably deflects toward the body portion upon slidable engagement between respective engagement surfaces during movement of the golf bag in a transverse direction toward the golf car. The arm deflects outwardly into a secure position with the female receiving portion upon advancement of the golf bag to the secure position.

A mounting arrangement and method of securing a golf bag on a golf car includes a support member arranged on the golf car. A retaining member is movably attached to the support member. The retaining member is movable between an installation position wherein the golf bag may be freely placed and removed from the golf car and a retained position wherein the retaining member engages a portion of the golf bag in a secure position.

According to other features the retaining member is pivotally attached to the support member. The retaining member is biased toward the retained position. The retaining member defines an arm having a first portion extending generally transverse to a longitudinal axis of the golf bag and a second portion extending generally parallel to the axis of the golf bag in the retained position. The first portion of the arm extends across an upper rim of the golf bag and the second portion extends through a plane defined by the upper rim into an inner cavity of the golf bag.in the retained position.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description of the preferred embodiments and the accompanying drawings, wherein:
FIG. 1 is a perspective view of a golf car incorporating an attachment member for securing a golf bag according to the present teachings;
FIG. 2 is top view of a golf bag incorporating a complementary attachment member for mating with the attachment member of FIG. 1;
FIG. 3 is a side perspective view of the golf bag being secured to the golf car;
FIG. 4 is top view of a golf bag attachment member and a golf car attachment member shown prior to engagement according to other features of the present invention;
FIG. 5 is a top view of the golf bag and golf car attachment members of FIG 4. shown during slidable communication between the respective attachment members;
FIG. 6 is a top view of the golf bag and golf car attachment members of FIG. 5 shown in a secure position; and
FIG. 7 is a perspective view of an attachment member arranged on a golf car according to other features of the present invention.

### DETAILED DESCRIPTION OF THE PREFERRED EMBODIMENTS

The following description of the preferred embodiment(s) is merely exemplary in nature and is in no way intended to limit the invention, its application, or uses.

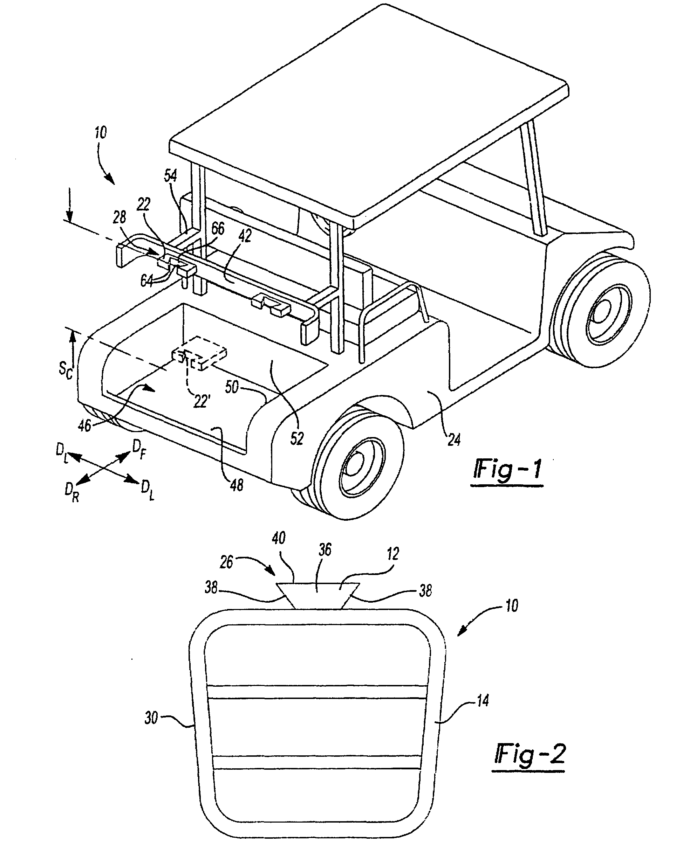

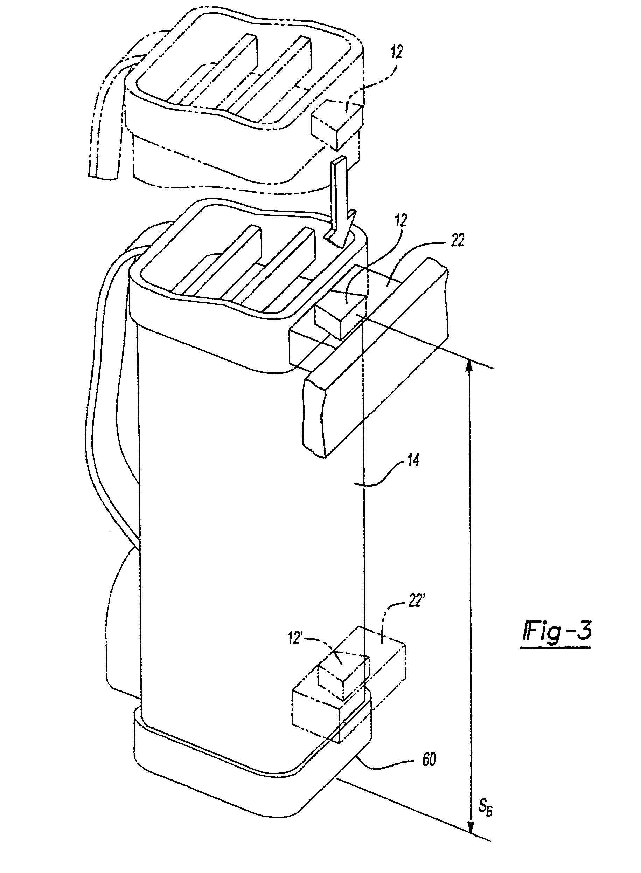

With initial reference to FIGS. 1 and 2, a mounting arrangement for securing a golf bag onto a golf car according to the present teachings is shown and generally identified at reference 10. The mounting arrangement 10 generally includes a first attachment member 12 associated with a golf bag 14 (FIG. 2) and a second attachment member 22 associated with a golf car 24 (FIG. 1). As will be described in greater detail, the respective first and second attachment members 12 and 22 cooperate to matingly engage each other in a secure position (FIG. 3).

As illustrated in FIG. 2, the first attachment member 12 presents a dovetail shape and generally defines a male insertion portion 26. The second attachment member 22 presents an inverted dovetail shape and generally defines a female receiving portion 28 (FIG. 1) for accepting the male insertion portion 26 in the secure position. It will be appreciated by one skilled in the art that the male insertion portion 26 may alternatively be located on the golf car 24 and the female insertion portion 28 located on the golf bag 14.

With specific reference now to FIG. 2, the first attachment member 12 will be described in greater detail. The first attachment member 12 extends outwardly from a perimeter 30 of the golf bag 14 proximate to an upper rim 32. While the perimeter 30 of the golf bag 14 is shown to have a generally trapezoidal contour, the first attachment member 12 may similarly be employed on a golf bag having alternate shapes, such as circular or rectangular for example. The first attachment member 12 may comprise a standalone component affixed to the golf bag 14 in a suitable manner or alternatively comprise an integrated feature of the golf bag 14, such as a molded-on extremity for example. The first attachment member 12 may be made of a rigid lightweight material such as hard plastic for example. As explained, the first attachment member 12 defines a male insertion portion 26. The male insertion portion 26 generally includes a body portion 36 having outwardly tapered sidewalls 38 extending away from the golf bag 14. A forward wall 40 extends between outer ends of the tapered sidewalls 38.

Returning now to FIG. 1, the second attachment member 22 will be described in greater detail. The second attachment member 22 extends from a support member 42 arranged on the golf car 24. The support member 42 is generally positioned on the golf car 24 to provide lateral support to the golf bag 14 while the golf bag 14 is positioned in an upright manner in a golf bag carrier area 46 of the golf car 24. The golf bag carrier area 46 is defined above a platform or lower support surface 48, between golf car wheel wells 50 and rearward of a well wall 52. The exemplary support member 42 is shown mounted to a support post 54 of the golf car 24 and extending in a generally vertically offset relationship with a plane of the lower support surface 48.

The second attachment member 22 is suitably coupled to the support member 42 such as by fasteners (not specifically shown). It is appreciated that the second attachment member 22 may alternatively be an integral feature of the support member 42. The second attachment member 22 is oriented in a vertically offset relationship with the lower support surface 48 a distance to cooperatively accept the first attachment member 12, In this way, a golf car span S_{c} defined as a distance between the lower support surface 48 and second attachment member 22 is substantially equivalent to a golf bag span S_{B} (FIG. 3) defined as a distance between a bottom surface 60 of the golf bag 14 and the first attachment member 12.

In an alternate orientation, a second attachment member 22' may be solely or additionally located on the well wall 52 for retaining a complementary first attachment member 12' (FIG. 3) extending near the bottom surface 60 of the golf bag 14. Moreover, first and second attachment members 12, 22 may be configured on the golf bag and golf car respectively, to cooperatively mate at any location between the upper rim 32 and the bottom surface 60 of the golf bag 14.

While the golf car 24 illustrated in FIG. 1 shows a single attachment member 22, it is appreciated that the golf car 24 may include two sets of first and second attachment members 12, 22. The attachment members 12, 22 may be arranged on the support member 42 (and optionally on the well wall 52) for mounting a pair of golf bags in a side by side relationship.

As explained, the second attachment member 22 defines a female receiving portion 28. The female receiving portion 28 defines a receiving structure having inwardly tapered sidewalls 64 extending away from the golf car 24. A rearward wall 66 extends between respective tapered sidewalls 64. The female receiving portion 28 is comprised of a rigid lightweight material such as hard plastic for example.

Turning now to FIG. 3, a method of attaching the golf bag 14 to the golf car 24 according to the present teachings will be described in greater detail. Initially, a user lifts the golf bag 14 to a location wherein the first attachment member 12 is generally vertically offset above the second attachment member 22 on the golf car 24. Next, the golf bag 14 is lowered (vertically downwardly as depicted in FIG. 3) such that the tapered sidewalls 64 of the female receiving portion 28 slidably accept the tapered sidewalls 38 of the male insertion portion 26. The golf bag 14 continues to be lowered until the bottom surface 60 of the golf bag 14 rests on the lower support surface 48 of the golf car 24. The tapered sidewalls 38 and 64 of the respective first and second attachment members 12 and 22 inhibit relative motion of the golf bag 14 in the rearward D_{R} and lateral D_{L} directions (FIG. 1) relative to the golf car 24. The forward wall 40 of the male insertion portion 26 and the rearward wall 66 of the female receiving portion 28 cooperate to inhibit relative motion of the golf bag 14 in the forward direction D_{F} (FIG. 1). Removal of the golf bag 14 is accomplished by lifting the bag 14 upwardly until the respective first and second attachment members 12 and 22 are disengaged.

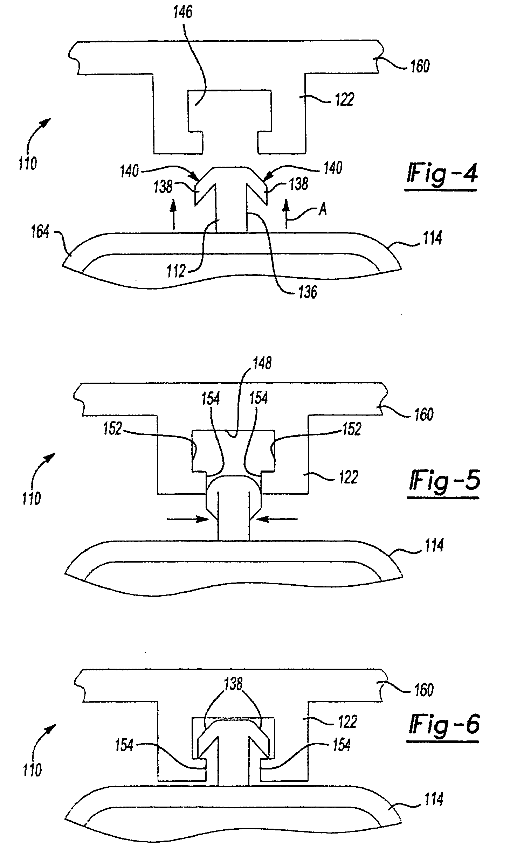

With reference now to FIGS. 4 - 6, a mounting arrangement 110 for mounting a golf bag onto a golf car according to other features of the present invention will be described. The mounting arrangement 110 generally includes a first attachment portion, or male insertion portion 112 extending from a golf bag 114 and a second attachment portion, or female receiving portion 122 extending from a golf car (not specifically shown). As will be described, the male insertion portion 112 is adapted to be accepted by the female receiving portion 122 in a secure position.

The male insertion portion 112 generally defines a body portion 136 having a pair of arms 138 extending outwardly therefrom. The arms 138 extend from the body portion 136 in a direction toward the golf bag 114 presenting engagement surfaces 140. The arms 138 are adapted to deflect inwardly toward the body portion 136 upon engagement with the female receiving portion 122 as will be described. In one form, the body portion 136 and arms 138 comprise a plastically deformable material.

The female receiving portion 122 defines a cavity 146 having a rearward wall 148, sidewalls 152 and opposing gate walls 154 (FIG. 5). The female receiving portion 122 is illustrated as an integrally molded feature of a golf car support member 160. The female receiving portion 122 may alternatively comprise a distinct component subsequently coupled to the support member 160 of the golf car. The female receiving portion 122 comprises a rigid lightweight material such as hard plastic for example. It is appreciated that the female receiving portion 122 may additionally or alternatively be located on the well wall 52 (FIG. 1) or be arranged at any location in the bag carrier area 46 for mating with a similarly arranged male insertion portion 112 on the golf bag 114.

Installation of the golf bag 114 onto the golf car with respect to the mounting arrangement 110 will now be described. At the outset, the golf bag 114 is lifted into a laterally offset relationship with the female receiving portion 122 (FIG. 4). It is appreciated that a bottom surface of the golf bag (such as bottom surface 60, FIG. 3) may be resting on the lower support surface of the golf car (lower surface 48, FIG. 1). Next, the golf bag 114 is advanced toward to the female receiving portion 122 in a generally horizontal direction (arrow A, along the longitudinal axis of the golf car 24). Upon advancement, the arms 138 of the male insertion 112 portion deflect inwardly as the engagement surfaces 140 slidably negotiate along the surface of the gate walls 154 of the female receiving portion 122 (FIG. 5). The male insertion portion 112 is further advanced until the arms 138 clear the gate arms 154 and return to an at rest position (FIG. 6). It is appreciated that while engagement between the male insertion portion 112 and female receiving portion 122 is accomplished by longitudinal advancement of the golf bag 114 toward the female receiving portion 122, engagement may similarly be achieved by rotating the golf bag 114 about its bottom surface toward the female receiving portion 122. Explained further, the golf bag 114 may be initially supported by resting the bottom surface (such as surface 60, FIG. 3) of the golf bag 114 on the lower support surface 48 of the golf car 24 (FIG. 1) in a tilted orientation (upper rim 164 rearwardly relative to the golf car 24), and subsequently rotated about its contact surface with the lower support surface 48 until attaining a vertical orientation. The motion of rotating the golf bag 114 about its contact surface with the golf car concurrently facilitates engagement between the male insertion portion 112 and the female receiving portion 122.

As illustrated in FIG. 6, the arms 138 span a distance greater than a distance between opposing gate arms 154 in a relaxed position. In this way, the male insertion portion 112 is securably nested into the female receiving portion 122. Removal of the golf bag 114 from the golf car is accomplished by lifting the golf bag 114 upwardly (in a direction out of the page as viewed from FIG. 6) until the male insertion portion 112 vertically clears the female receiving portion 122. It is appreciated that the arms may alternatively be biased outwardly by mechanical biasing members such as a springs for example. Moreover, while the arms 138 of the male insertion portion 112 have been described as providing the required deflection during installation, the gate arms 154 may alternatively provide deflection through a plastically deformable material or supplemenial biasing members.

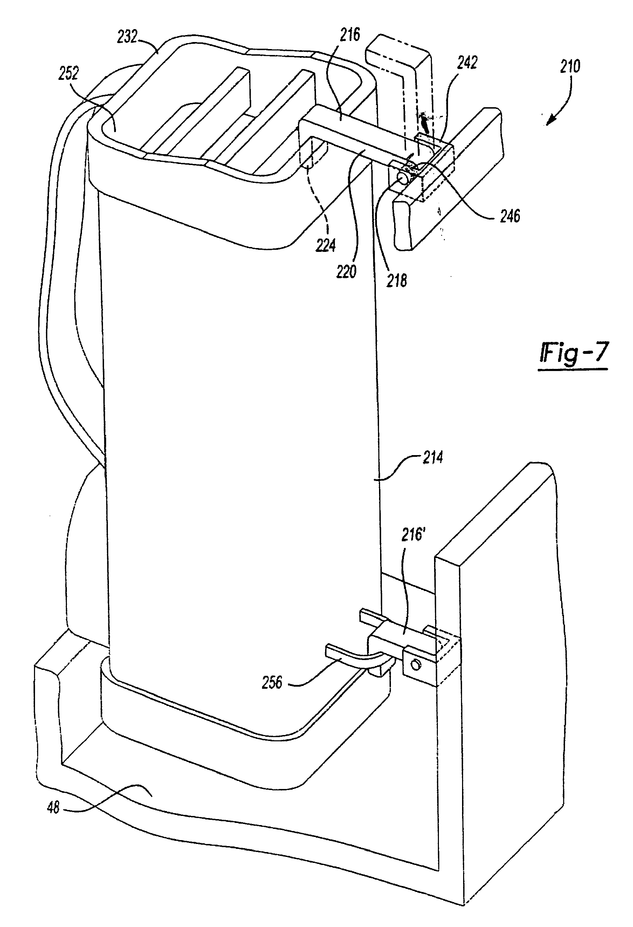

With reference now to FIG. 7, a mounting arrangement 210 for mounting a golf bag onto a golf car according to other features of the present invention will be described. The mounting arrangement 210 generally includes a retaining member or arm 216 movably attached to a mounting point 218 on a support member 242 of the golf car. The retaining member 216 is adapted to move between an installation position wherein a golf bag 214 may be freely placed and removed from a golf car (phantom line, FIG. 7) and a retaining position wherein the retaining member 216 engages a portion of the golf bag 214 in a secure position (solid line, FIG. 7).

The retaining member 216 generally defines a first portion 220 extending generally transverse to a longitudinal axis of the golf bag 214 and a second portion 224 extending generally parallel to the axis of the golf bag 214 in the retaining position. The retaining member 216 is pivotally coupled to the support member 242. As a result, movement between the installation and retaining positions is accomplished by rotating retaining member 216 about a pivot point 218. A biasing member 246, such as a coil spring, is arranged between the retaining member 216 and the support member 242 for biasing the retaining member 216 toward the retaining position. In the retaining position, the first portion 220 of the arm 216 extends across the upper rim 232 of the golf bag 214 and the second portion 224 extends through a plane defined by the upper rim 232 into an inner cavity 252 of the golf bag 214. As a result, the first portion 220 of the arm 216 resists movement of the golf bag 214 along the longitudinal axis and the second portion 224 resists movement of the golf bag 214 in a direction transverse to the longitudinal axis in the retaining position.

A retaining member 216' may alternatively, or additionally be implemented according to additional features. As shown in phantom, retaining member 216' may be located toward a bottom surface of the golf bag 214 for catching an extension of the bag 214 such as a loop 256 in a secure position.

A method of attaching a golf bag to a golf car employing the retaining member 216 of the mounting arrangement 210 will now be described. At the outset, the golf bag 214 is lifted by the user onto a vertically supported position with the golf car. Next, the retaining member 216 is moved from the retaining position to the installation position while overcoming the force of the biasing member 246. It is appreciated that the retaining member 216 may alternatively be moved to the installation position subsequent to or concurrently with locating the golf bag 214 onto the platform 48.

Next, the retaining member 216 is returned to the retaining position into an engaged relationship with the golf bag 214. It is appreciated that the biasing member 246 will tend to urge the retaining member 216 toward the retaining position. In this way, the user may simply release the retaining member 216 at the installation position and allow it to pivot into the retaining position. It is noted, that returning the retaining member 216 to the retaining position may require the user to arrange the contents of the inner space 252 of the golf bag 214 appropriately to provide clearance for the retaining member 216.

One skilled in the art will appreciate that while the retaining member 216 has been illustrated and described as pivotally operable about the mounting point 218, the retaining member 216 may alternatively rotate about a longitudinal axis defined generally by the first portion 220 of the retaining member 216. Furthermore, the movement between the installation and retaining positions may alternatively be accomplished by linear translation of the retaining member 216 in a vertical direction parallel to the longitudinal axis of the golf bag 214. In such a configuration, a track mechanism, slide mechanism or similar device may be employed to facilitate any required linear translation of the retaining member 216. In yet another variation, the retaining member 216 may comprise an elastic material. As a result, the retaining member would extend at the retaining position while in a relaxed state. Installation and removal of a golf bag 214 would require a user to pull upwardly or twist about the axis defined by the first portion 220 of the retaining member 216. The pulling and/or twisting action would elastically deform the retaining member 216 (to an installation position) while the user locates the golf bag 214 in the vertically supported position on the golf car. Releasing the retaining member 216 would allow it to simply return to its relaxed state, or the retaining position whereby the golf bag 214 is secured by the retaining member 216.

Those skilled in the art can now appreciate from the foregoing description that the broad teachings of the present invention can be implemented in a variety of forms. For example, while the golf car span and the golf bag span have been described as presenting equivalent distances, at least one of the first and second attachment members may be adjustable in the vertical direction, relative to the support member and golf bag respectively, to achieve proper alignment for mating. Furthermore, the attachment members 12 and 22 may be used in conjunction with the attachment members 112 and 122 and/or the retaining member 216. Therefore, while this invention has been described in connection with particular examples thereof, the true scope of the invention should not be so limited since other modifications will become apparent to the skilled practitioner upon a study of the drawings, the specification and the following claims.

## Claims

1. A system for mounting a golf bag onto a golf car in a secure position comprising:
a first attachment member arranged on the golf bag; and
a second attachment member arranged on the golf car;
wherein the first attachment member presents an engagement surface operable to matingly engage a complementary engagement surface on said second attachment member in the secure position.

2. The system of claim 1 wherein one of the first and second attachment members defines a male insertion portion and the other of said attachment members defines a female receiving portion.

3. The system of claim 2 wherein said first and second attachment members cooperatively mate upon movement of the golf bag in a linear direction relative to the golf car.

4. The system of claim 3 wherein said linear direction is substantially parallel to a longitudinal axis of the golf bag.

5. The system of any of claims 2 to 4 wherein said male insertion portion defines a dovetail shape.

6. The system of any of claims 2 to 4 wherein said male insertion portion defines a body portion having outwardly tapered sidewalls extending away from the golf bag and wherein said female receiving portion defines a receiving structure having inwardly tapered sidewalls extending away from the golf car.

7. The system of claim 3 wherein said linear direction is substantially transverse to an axis of the golf bag.

8. The system of claim 7 wherein said male insertion portion defines a body portion and at least one arm extending outwardly from said body portion.

9. The system of claim 8 wherein said at least one arm operably deflects toward said body portion upon slidable engagement between respective engagement surfaces during movement of the golf bag in said transverse direction toward the golf car and wherein said arm deflects outwardly into a secure position with said female receiving portion upon advancement of the golf bag to the secure position.

10. The system of any preceding claim wherein said first attachment member is located proximate an upper rim of the golf bag.

11. The system of any of claims 1 to 9 wherein said first attachment member is located proximate a bottom surface of the golf bag.

12. The system of claim 1 wherein said first attachment member comprises a pair of first attachment members disposed on a line parallel to a longitudinal axis of the golf bag and wherein said second attachment member comprises a complementary pair of second attachment members arranged on the golf car for matingly engaging said pair of first attachment members.

13. A method of securably attaching a golf bag to a golf car comprising:
locating a first attachment member on the golf bag proximate a second attachment member on the golf car; and
advancing said first attachment member toward said second attachment member whereby said first attachment member securably mates with said second attachment member.

14. The method of claim 13 wherein advancing said first attachment member includes advancing the golf bag in a linear direction relative to the golf car whereby an engagement surface on said first attachment member mates with a complementary engagement surface on said second attachment member.

15. The method of claim 14 wherein advancing the golf bag in a linear direction includes advancing the golf bag in a direction substantially linear to an axis of the golf bag.

16. The method of claim 15 wherein advancing said first attachment member toward said second attachment member includes cooperatively mating a male insertion portion and a female receiving portion.

17. The method of claim 16 wherein cooperatively mating a male insertion portion and a female receiving portion includes slidably engaging outwardly extending tapered sidewalls of said male insertion portion with inwardly extending tapered sidewalls of said female receiving portion.

18. The method of claim 14 wherein advancing the golf bag in a linear direction includes advancing the golf bag in a direction substantially transverse to an axis of the golf bag.

19. The method of claim 18 wherein advancing said first attachment member toward said second attachment member comprises:
advancing said first attachment member to a first position engaged with said second attachment member;
advancing said first attachment member through a second position whereby an arm extending from said first attachment member deflects inwardly as said first attachment member is advanced toward said second attachment member; and
advancing said first attachment member to a third position whereby said arm deflects outwardly into a secure retained relationship with said second attachment member.

20. The method of claim 13 comprising the steps of:
positioning the golf bag in a vertically supported position on the golf car; and
moving a retaining member of the second attachment member from an installation position wherein said retaining member extends away from contact with the golf bag to a retaining position wherein said retaining member extends into an engaged relationship with the golf bag.

21. The system of claim 1 wherein the second attachment member comprises a support member and a retaining member movably attached to said support member, said retaining member movable between an installation position wherein the golf bag may be freely placed and removed from the golf car and a retaining position wherein said retaining member engages as said first attachment member a portion of the golf bag in a secure position.

22. A system for securing a golf bag on a golf car comprising:
a support member arranged on the golf car; and
a retaining member movably attached to said support member, said retaining member movable between an installation position wherein the golf bag may be freely placed and removed from the golf car and a retaining position
wherein said retaining member engages a portion of the golf bag in a secure position.

23. The system of claim 21 or 22 wherein said retaining member is pivotally attached to said support member.

24. The system of any of claims 21 to 23 wherein said retaining member is biased toward said retaining position.

25. The system of any of claims 21 to 24 wherein said retaining member defines an arm having a first portion extending generally transverse to a longitudinal axis of the golf bag and a second portion extending generally parallel to said axis of the golf bag in said retaining position.

26. The system of claim 25 wherein said first portion of said arm extends across an upper rim of the golf bag and wherein said second portion extends through a plane defined by said upper rim into an inner cavity of the golf bag in said retaining position.

27. The system of claim 25 or 26 wherein said first portion of said arm resists movement of the golf bag along said longitudinal axis and wherein said second portion resists movement of the golf bag in a direction transverse to said longitudinal axis in said retaining position.

28. A method of securably attaching a golf bag to a golf car comprising:
positioning the golf bag in a vertically supported position on the golf car; and
moving a retaining member from an installation position wherein said retaining member extends away from contact with the golf bag to a retaining position wherein said retaining member extends into an engaged relationship with the golf bag.

29. The method of claim 20 or 28 wherein positioning the golf bag comprises:
moving said retaining member into said installation position while overcoming a biasing force exerted on said retaining member toward said retaining position; and
locating the golf bag onto a golf bag platform on the golf car.

30. The method of claim 20, 28 or 29 wherein moving a retaining member includes pivotally rotating said retaining member from said installation position to said retaining position.

31. The method of any of claims 20, and 28 to 30 wherein moving a retaining member comprises:
moving an arm of said retaining member from an installation position to a retaining position wherein a first portion of said arm extends generally transverse to a longitudinal axis of the golf bag and a second portion of said arm extends generally parallel to said axis of the golf bag, said first portion resisting movement of the golf bag in a direction along said axis and said second portion resisting movement of the golf bag in a direction transverse to said axis.
